# EUROPÄISCHE PATENTSCHRIFT

(11) **EP 3 778 293 B1**
(45) Veröffentlichungstag und Bekanntmachung des Hinweises auf die Patenterteilung: **19.10.2022**
(21) Anmeldenummer: 20190397.8
(22) Anmeldetag: 11.08.2020
(51) Int. Cl.: B60N 2/02, B60N 2/16, B60N 2/50, H01H 9/04

(54) **FAHRZEUGSITZ MIT HÖHENVERSTELLEINRICHTUNG**
VEHICLE SEAT WITH HEIGHT ADJUSTMENT DEVICE
SIÈGE DE VÉHICULE POURVU DE DISPOSITIF DE RÉGLAGE DE LA HAUTEUR

(30) Priorität: 13.08.2019 DE 102019121812
(43) Veröffentlichungstag der Anmeldung: 17.02.2021
(73) Patentinhaber: GRAMMER AG, 92289 Ursensollen (DE)
(72) Erfinder: Pelka, Joachim, 92224 Amberg (DE)
(74) Vertreter: Hannke, Christian

(56) Entgegenhaltungen:
- WO-A2-02/05387
- DE-C1- 19 806 479
- US-A- 5 380 968

## Beschreibung

Die Erfindung betrifft einen Fahrzeugsitz mit einem Oberteil, welches gegenüber einem Unterteil mittels einer Höhenverstelleinrichtung in Höhenrichtung des Fahrzeugsitzes verstellbar gelagert ist, wobei die Höhenverstelleinrichtung einen ersten Schalter, mittels dessen Betätigung das Oberteil nach oben verstellbar ist, und einen zweiten Schalter, mittels dessen Betätigung das Oberteil nach unten verstellbar ist, umfasst, gemäß dem Oberbegriff des Anspruchs 1.

Am Oberteil des Fahrzeugsitzes ist beispielsweise das eigentliche Sitzteil angeordnet. Das Unterteil des Fahrzeugsitzes ist wiederum zumeist fest mit einem Untergrund der Fahrzeugkabine verbunden. Damit ein Sitzinsasse und/oder Fahrer, die in der Fahrerkabine in der Nähe des Fahrzeugsitzes angeordneten Bedienelemente gut erreichen und einen guten Blick auf die Umgebung des Fahrzeugs durch die Windschutzscheibe werfen kann, ist es erwünscht, dass sich die Höhe des Oberteils in Relation zum Unterteil je nach Wunsch oder Größe des Fahrers einstellen lässt. Dies ist vor allem relevant für Fahrzeugsitze verhältnismäßig kleiner Fahrzeuge wie Gabelstapler oder Kleintraktoren, die beispielsweise zur Arbeit in Weinbergen oder eng bepflanzten Obstplantagen verwendet werden.

Höhenverstelleinrichtungen für Fahrzeugsitze, mittels welchen das Oberteil gegenüber dem Unterteil höhenverstellbar ist, sind aus dem Stand der Technik an sich bekannt. Beispielsweise ist hier eine Scherengestellmechanik bereitgestellt, welche mit einer Federungseinrichtung und/oder einer Dämpfungseinrichtung kombiniert werden kann. Die Federungseinrichtung umfasst beispielsweise eine zwischen dem Oberteil und dem Unterteil angeordnete Luftfeder. So kann der Luftfeder Luft zugeführt werden, um den Fahrzeugsitz nach oben zu verstellen, und der Luftfeder Luft entnommen werden, um den Fahrzeugsitz nach unten zu verstellen. Die Ansteuerung der Luftzufuhr oder der Luftentnahme erfolgt dabei beispielsweise über Ventile und/oder Schalter, deren Ansteuerung beispielsweise über die Betätigung eines Betätigungselements durch den Fahrer realisiert wird.

DE 198 06 479 C1 zeigt eine Steuereinrichtung für die Verstellung von Sitzteilen, die im Wesentlichen aus einem plattenförmigen Tragekörper mit mehreren Bedieneinheiten besteht. Der harte und unverformbare Kern des Griffbereiches ist ummantelt von einer flexiblen Betätigungsoberfläche, wobei zwischen der Ummantelung und dem Kern mehrere Signalgeber angeordnet sind, die eine bestimmte Richtung auszuführende Verstellung des Sitzes signalisiert. Der Kern ist dabei einstückig ausgebildet und in seiner Kontur einem Sitz abstrakt nachgebildet.

Oft umfassen diese Höhenverstelleinrichtungen allerdings eine komplizierte Mechanik mit zahlreichen und zumindest zum Teil miteinander wechselwirkenden Bauteilen, welche zwischen dem Betätigungselement und den Ventilen und/oder Schaltern angeordnet sind. Der Nachteil hierbei ist, dass jede Wechselwirkung, insbesondere jede mechanische Verbindung zweier Bauteile, generell mit einer gewissen Form- und/oder Lagetoleranz einhergeht. Diese Form- und/oder Lagetoleranzen können sich aufsummieren, so dass im Extremfall das mechanische Zusammenspiel nicht mehr einwandfrei funktioniert und die Höhenverstellung des Oberteils nicht mehr zuverlässig durchgeführt werden kann. Außerdem ist eine derartige Höhenverstelleinrichtung aufgrund der Vielzahl der Bauteile und der komplizierten Montage fehleranfällig und kostenintensiv. Nicht zuletzt geht dies mit einem erhöhten Platzbedarf einher, was bei den eingangs erwähnten kleinen Fahrzeugen problematisch sein kann.

Es ist daher Aufgabe der vorliegenden Erfindung, ein Fahrzeugsitz mit einer Höhenverstelleinrichtung zu entwickeln, welche eine kompakte, einfache und dennoch zuverlässige Ausgestaltung darstellt.

Die Aufgabe der Erfindung wird gelöst von einem Fahrzeugsitz mit einem Oberteil, welches gegenüber einem Unterteil mittels einer Höhenverstelleinrichtung in Höhenrichtung des Fahrzeugsitzes verstellbar gelagert ist, wobei die Höhenverstelleinrichtung einen ersten Schalter, mittels dessen Betätigung das Oberteil nach oben verstellbar ist, und einen zweiten Schalter, mittels dessen Betätigung das Oberteil nach unten verstellbar ist, umfasst. Erfindungsgemäß ist ein Griffelement der Höhenverstelleinrichtung mit einem ersten, einem zweiten und einem dritten Abschnitt vorgesehen, wobei die Abschnitte miteinander verbunden und zueinander beweglich gelagert sind. Ausgehend von einem Grundzustand des Griffelements ist mittels einer Verlagerung der Abschnitte zueinander in eine erste Richtung ein erster Verformungszustand des Griffelements und mittels einer Verlagerung der Abschnitte zueinander in eine zur ersten Richtung gegenläufige zweite Richtung ein zweiter Verformungszustand des Griffelements erzielbar. Dabei ist im ersten Verformungszustand mittels des Griffelements der erste Schalter und im zweiten Verformungszustand mittels des Griffelements der zweite Schalter betätigbar.

Vorteilhaft ist das Griffelement lediglich in die zwei genannten Richtungen verformbar. Durch die gegenläufige Anordnung der beiden Richtungen kann eine Verformung in die erste Richtung nur zeitlich unabhängig von einer Verformung in die zweite Richtung stattfinden. Die beiden Verformungen können also nicht zeitgleich stattfinden. Damit ist eine eindeutige und intuitive Betätigung des Griffelements ermöglicht. Eine Fehlbedienung ist quasi ausgeschlossen.

Vorteilhaft entspricht der Grundzustand einem Zustand des Griffelements, gemäß welchem das Griffelement zumindest außerhalb der Stellen, mittels welchen es gelagert ist, verformungsfrei ist.

Die Verformung in die erste oder in die zweite Richtung kann durch die Applikation einer Kraft, beispielsweise der Muskelkraft des Fahrers, erfolgen. Bevorzugt ist das Griffelement elastisch ausgestaltet, so dass es, wenn die die Verformung auslösende Kraft nicht mehr anliegt, ausgehend vom ersten oder zweiten Verformungszustand wieder selbstständig in den Grundzustand rückverformbar ist und dass der erste und der zweite Schalter nicht mehr in einem betätigten Zustand vorliegen. Vorteilhaft ist also die Rückstellmechanik zur Rückstellung des Griffelements in den Grundzustand nicht separat ausgebildet, sondern mittels des Griffelements selbst ausgestaltet, was weitere Bauteile und Kosten spart.

Ebenfalls kann es vorteilhaft sein, wenn mit der Verlagerung der Abschnitte zueinander in die erste oder zweite Richtung zeitgleich eine Verformung mindestens eines Abschnitts der zueinander beweglich gelagerten Abschnitte einhergeht. Bevorzugt ist diese Verformung elastisch ausgebildet und damit reversibel, wenn die die Verformung auslösende Kraft nicht mehr anliegt.

Das Griffelement ist dabei bevorzugt unterhalb einer Sitzfläche des Fahrzeugsitzes angeordnet. Ist das Griffelement am Oberteil angeordnet, so ist dafür gesorgt, dass der Abstand zwischen dem Griffelement und der Hand des Fahrers, die das Griffelement betätigt, unabhängig von der eingestellten Höhe des Oberteils in Relation zum Unterteil stets gleich ist.

Beispielsweise weist der Fahrzeugsitz eine Längsverstelleinrichtung mit zwei Schienenpaaren auf, wobei jedes Schienenpaar eine untere Führungsschiene und eine obere Gleitschiene aufweist. Beispielsweise kann das Griffelement in Breitenrichtung des Fahrzeugsitzes zwischen den beiden Schienenpaaren und/oder in Höhenrichtung des Fahrzeugsitzes zumindest abschnittsweise auf gleicher Höhe zu diesen Schienenpaaren und/oder in Längsrichtung des Fahrzeugsitzes unmittelbar vor einem vorderen Ende der beiden Gleitschienen angeordnet sein.

Alternativ kann es vorgesehen sein, dass das Griffelement am Unterteil angeordnet ist.

Bevorzugt entspricht die erste Richtung, in welche das Griffelement verformbar ist, einer Höhenrichtung des Fahrzeugsitzes nach oben oder weist zumindest einen Anteil in Höhenrichtung des Fahrzeugsitzes nach oben auf. Bevorzugt entspricht die zweite Richtung, in welche das Griffelement verformbar ist, einer Höhenrichtung des Fahrzeugsitzes nach unten oder weist zumindest einen Anteil in Höhenrichtung des Fahrzeugsitzes nach unten auf. Damit ist dem Fahrer eine Bedienlogik bereitgestellt, welche äußerst intuitiv ist. Zum Verstellen des Fahrzeugsitzes nach oben muss der Fahrer nämlich auch das Griffelement nach oben verformen; analog muss der Fahrer zum Verstellen des Fahrzeugsitzes nach unten das Griffelement nach unten verformen.

Im Sinne der vorliegenden Erfindung wird unter einer "Verlagerung" eine Translationsbewegung, eine Rotationsbewegung oder eine kombinierte Bewegung, also eine Bewegung, bei welcher sich eine oder mehrere Translationsbewegungen und/oder eine oder mehrere Rotationsbewegungen überlagern, verstanden. Bevorzugt erfahren der erste und/oder der dritte Abschnitt eine Rotationsbewegung. Bevorzugt erfährt der zweite Abschnitt eine kombinierte Bewegung aus einer Rotationsbewegung und einer Translationsbewegung.

Das Griffelement ist also in sich verformbar ausgestaltet. Bevorzugt bleiben zumindest einige Teile des Griffelements bei beiden Verformungen stationär, verformen sich also nicht mit.

Eine bevorzugte mechanische Ausgestaltung des Griffelements sieht vor, dass der zweite beweglich gelagerte Abschnitt an einem ersten Ende mittels eines ersten Filmscharniers mit dem ersten beweglich gelagerten Abschnitt und an einem zweiten Ende mittels eines zweiten Filmscharniers mit dem dritten beweglich gelagerten Abschnitt verbunden ist.

Scharniere sind generell Lager, welche einen einzelnen rotativen Freiheitsgrad ermöglichen. Ein Filmscharnier ist aus dem Stand der Technik bekannt und stellt ein Scharnier dar, welches ohne mechanische Bauelemente wie Achsen, Hebel, Federn etc. auskommt. Es ist mittels einer flexiblen, dünnwandigen Gelenkrille zwischen zwei zu verbindenden Teilen ausgestaltet. Die beiden Teile, welche durch das Filmscharnier verbunden sind, und das Filmscharnier sind also miteinander einstückig ausgestaltet.

Es ist also mittels der Verwendung von zwei Filmscharnieren für eine kostengünstige Lösung gesorgt, da das Scharnier und der erste, zweite und dritte Abschnitt aus dem gleichen Material ausgebildet sein können. Durch Verbindung der Abschnitte wie beschrieben ist außerdem eine intuitive Betätigung möglich.

Der erste, zweite und dritte Abschnitt und die beiden Filmscharniere bilden also miteinander bevorzugt ein einstückiges Teil, welches in einem einzigen Fertigungsschritt gefertigt werden kann. Beispielsweise kann dieses einstückige Teil in einem Spritzgussprozess gefertigt werden.

Als bevorzugte Materialien für das Griffelement kommen beispielsweise ein Thermoplast oder Mischungen aus Thermoplasten in Frage, beispielsweise aus einem oder mehreren der folgenden Materialien: Acrylnitril-Butadien-Styrol (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und Polyvinylchlorid (PVC). Denkbar sind auch Materialien, die einen oder mehrere der oben genannten Kunststoffe aufweisen und zusätzlich mittels Glasfasern und/oder Carbonfasern faserverstärkt sind.

Der erste und/oder der dritte Abschnitt weisen dabei bevorzugt im Wesentlichen die Form eines Rechtecks oder eines Trapezes auf. Der erste Abschnitt ist bevorzugt kontaktlos zum dritten Abschnitt angeordnet; bevorzugt gilt dies für sämtliche Zustände des Griffelements, also insbesondere für den Grundzustand, die beiden Verformungszustände und jeden Zustand dazwischen.

Der zweite Abschnitt weist dabei bevorzugt im Wesentlichen die Form eines Rechtecks auf. Es kann vorteilhaft sein, wenn der zweite Abschnitt einen Verstärkungsabschnitt aufweist, welcher in Form einer Materialverdickung ausgestaltet ist. Beispielsweise ist die Materialverdickung in Form einer länglichen Wulst oder Lasche ausgestaltet, welche beispielsweise senkrecht zur ersten und zur zweiten Richtung und/oder parallel zur Breitenrichtung des Fahrzeugsitzes angeordnet ist. Die Anordnung des Verstärkungsabschnitts hat den Vorteil, dass der Fahrer nur diesen Verstärkungsabschnitt des zweiten Abschnitts kontaktieren muss, um die Verformung in die erste oder in die zweite Richtung durchführen zu können. Die Materialverdickung kann also durch die Hand des Fahrers von oben und von unten gut ergriffen werden; beispielsweise kann der Fahrer die Materialverdickung zwischen Daumen und Zeigefinger nehmen und nach oben ziehen oder nach unten drücken, um letztendlich die Höhenverstellung auszulösen.

Es ist ferner bevorzugt, wenn im ersten Verformungszustand ein unmittelbarer Kontakt zwischen dem ersten Schalter und dem ersten beweglich gelagerten Abschnitt und im zweiten Verformungszustand ein unmittelbarer Kontakt zwischen dem zweiten Schalter und dem dritten beweglich gelagerten Abschnitt ausgebildet sind. Bevorzugt ist im ersten Verformungszustand ein unmittelbarer Kontakt zwischen einem Auslöseelement des ersten Schalters und einem Anteil des ersten beweglich gelagerten Abschnitts und im zweiten Verformungszustand ein unmittelbarer Kontakt zwischen einem Auslöseelement des zweiten Schalters und einem Anteil des dritten beweglich gelagerten Abschnitts ausgebildet.

Unter einem Auslöseelement eines Schalters wird der Anteil des Schalters verstanden, welcher zum Auslösen eines Schaltvorgangs, mithin zum Betätigen des Schalters, kontaktiert werden muss. Beispielsweise ist der Schalter als Drucktaster ausgestaltet.

Analog dazu sind im Grundzustand des Griffelements bevorzugt beide Schalter kontaktfrei zum ersten und zum dritten Abschnitt sowie kontaktfrei zu jeglichem anderen Element angeordnet. Das gleiche gilt bevorzugt auch für beide Auslöseelemente der Schalter.

Der Vorteil liegt hier darin, dass jeweils ein separates Element des Griffelements nur eine der Auslösefunktionen übernimmt. Die Zuordnung der Abschnitte des Griffelements zu den gewünschten Schaltvorgängen ist also eindeutig.

Der unmittelbare Kontakt ist außerdem vorteilhaft, da keine zwischen den Abschnitten und den Schaltern geschalteten Elemente vorgesehen sind, was wie oben erläutert die Zuverlässigkeit der Mechanik erhöht.

Ist zudem die obige Anordnung gewährleistet, wonach der zweite Abschnitt zwischen dem ersten und dem dritten Abschnitt angeordnet ist, so ist gewährleistet, dass die beiden baulich voneinander getrennten Abschnitte, nämlich der erste und der dritte Abschnitt, die Auslösefunktionen übernehmen. Eine versehentliche Auslösung der Höhenverstelleinrichtung in eine unerwünschte Richtung ist damit so gut wie ausgeschlossen.

Ebenfalls ist es bevorzugt, dass der zweite beweglich gelagerte Abschnitt im Grundzustand, im ersten Verformungszustand und im zweiten Verformungszustand des Griffelements kontaktlos zum ersten Schalter und zum zweiten Schalter angeordnet ist. Somit wird vermieden, dass der zweite Abschnitt versehentlich einen der beiden Schalter kontaktiert und die Höhenverstellung auslöst.

Generell ist es vorteilhaft, wenn der Anteil des ersten oder dritten Abschnitts, der einen der beiden Schalter kontaktieren soll (im Nachfolgenden als "Schaltfahne" bezeichnet), hinsichtlich seiner jeweiligen Position gemäß dem Grundzustand, dem ersten Verformungszustand und/oder dem zweiten Verformungszustand jeweils einen deutlichen Unterschied aufweist, damit eindeutig zwischen einer Schaltposition und einer sonstigen Position unterschieden werden kann.

Der erste und der dritte Abschnitt sind bevorzugt in sich elastisch verformbar ausgestaltet. Bevorzugt sind sie an einem Ende gelagert und an einem anderen, dem zweiten Abschnitt zugewandten Ende mit dem zweiten Abschnitt verbunden. Somit kann beispielsweise eine bestimmte Stelle des ersten und/oder dritten Abschnitts, welche möglichst weit von der jeweiligen Lagerstelle entfernt angeordnet sind, als Schaltfahne dienen. Gleichzeitig sollte die Stelle nicht zu nah am zweiten Abschnitt angeordnet sein, um einen unerwünschten Kontakt zwischen dem zweiten Abschnitt und den Schaltern zu vermeiden.

Wenn der zweite Abschnitt zwischen den ersten und den dritten Abschnitt geschaltet ist und/oder eine überlagerte Bewegung durchführt, so ist mittels dieser Bewegung ein weniger eindeutiger Unterschied zwischen der Position des zweiten Abschnitts in den drei genannten Zuständen möglich. Es ist also vorteilhaft, wenn der zweite Abschnitt eine verbindende und keine schaltende Funktion übernimmt.

Erfindungsgemäß umfasst die Höhenverstelleinrichtung ein mit dem Oberteil oder dem Unterteil verbundenes Trägerelement, welches an einem ersten Ende einen ersten Lagersitz für den ersten beweglich gelagerten Abschnitt und einen zweiten Lagersitz für den dritten beweglich gelagerten Abschnitt ausbildet.

Der Vorteil dieser Anordnung ist, dass die Lagerung des ersten und des dritten Abschnitts über das gleiche Element realisiert ist. Damit sind Positionsabweichungen (Lagetoleranzen) zwischen dem ersten und dem dritten Abschnitt minimiert, und der Schaltvorgang kann zuverlässig und präzise stattfinden.

Bevorzugt ist das erste Ende des Trägerelements in Sitzlängsrichtung hinten angeordnet.

Dabei ist es vorteilhaft, wenn der erste beweglich gelagerte Abschnitt mittels einer festen Einspannung mit dem ersten Lagersitz verbunden ist. Diese Lagerung ist also dazu vorgesehen, sämtliche Freiheitsgrade des ersten beweglich gelagerten Abschnitts zumindest an der Lagerstelle zu eliminieren. Beispielsweise ist die feste Einspannung mittels einer Schraub- oder einer Nietverbindung ausgestaltet. Da das Griffelement wie oben beschrieben elastisch verformbar ist, kann sich der erste beweglich gelagerte Abschnitt dennoch verformen.

Ebenfalls ist es vorteilhaft, wenn der dritte beweglich gelagerte Abschnitt mittels einer formschlüssigen Verbindung mit dem zweiten Lagersitz verbunden ist. Beispielsweise ist die formschlüssige Verbindung mittels einer Einhängung, einer Steck- oder einer Schnappverbindung ausgestaltet.

Ferner hat es sich als vorteilhaft herausgestellt, wenn das Trägerelement an einem zweiten Ende einen dritten Lagersitz für den ersten Schalter und einen vierten Lagersitz für den zweiten Schalter ausbildet. Je nach Art des Schalters kann der erste und/oder der zweite Schalter beispielsweise mittels einer Schraub- oder einer Steckverbindung mit dem dritten oder dem vierten Lagersitz verbunden sein.

Bevorzugt ist das zweite Ende des Trägerelements in Sitzlängsrichtung vorne angeordnet.

Dadurch ist gewährleistet, dass ein einzelnes Element, nämlich das Trägerelement, die Lagersitze für die Schalter und für die Schaltfahnen bereitstellt. Damit sind Positionsabweichungen (Lagetoleranzen) zwischen beiden Schaltern, zwischen beiden Schaltfahnen sowie zwischen jeweils einem der Schalter und der dazugehörigen Schaltfahne minimiert; der Schaltvorgang kann zuverlässig stattfinden. Beispielsweise ist das Trägerelement als einstückiges Zerspanungsteil oder als einstückiges Spritzgussteil ausgestaltet; somit ist eine hohe Flexibilität bei der Formgebung des Trägerteils und der Ausgestaltung der Lagersitze gewährleistet.

Weitere Vorteile, Ziele und Eigenschaften vorliegender Erfindung werden anhand anliegender Zeichnung und nachfolgender Beschreibung erläutert, in welchen ein Fahrzeugsitz beispielhaft mit unterschiedlich ausgestalteten Führungseinrichtungen dargestellt und beschrieben ist.

In der Zeichnung zeigen:
- Figur 1: eine perspektivische Ansicht eines erfindungsgemäßen Fahrzeugsitzes;
- Figur 2a: eine Seitenansicht eines Ausschnitts des Fahrzeugsitzes gemäß der Fig. 1;
- Figur 2b: eine perspektivische Ansicht eines weiteren Ausschnitts des Fahrzeugsitzes gemäß der Fig. 1;
- Figur 2c: eine perspektivische Ansicht eines Teils der Höhenverstelleinrichtung ohne Griffelement;
- Figur 2d: eine Explosionsdarstellung des Teils der Höhenverstelleinrichtung gemäß der Fig. 2c;
- Figur 2e: eine perspektivische Ansicht eines Teils der Höhenverstelleinrichtung mit Griffelement;
- Figur 2f: eine Explosionsdarstellung eines Teils der Höhenverstelleinrichtung gemäß einer Variante;
- Figur 3: eine Prinzipskizze der Verformung eines Griffelements;
- Figur 4a: einen vereinfacht dargestellten Querschnitt durch die Höhenverstelleinrichtung gemäß einem ersten Verformungszustand des Griffelements;
- Figur 4b: einen vereinfacht dargestellten Querschnitt durch die Höhenverstelleinrichtung gemäß einem Grundzustand des Griffelements;
- Figur 4c: einen vereinfacht dargestellten Querschnitt durch die Höhenverstelleinrichtung gemäß einem zweiten Verformungszustand des Griffelements.

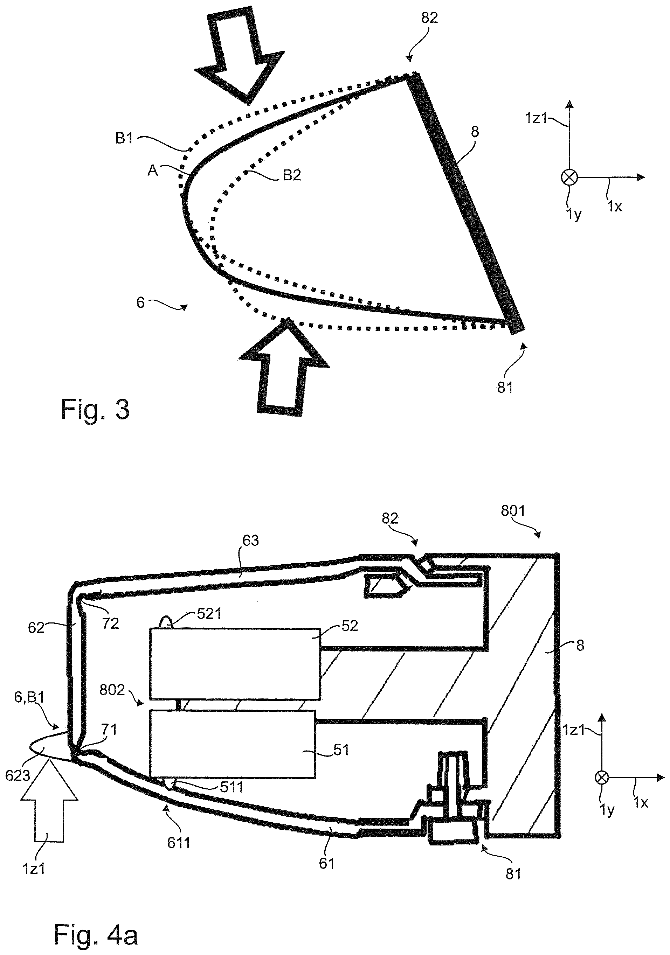

Es sei vorliegend erwähnt, dass die Figur 3 eine rein schematische Darstellung zeigt, gemäß welcher der Grundzustand A sowie die beiden Verformungszustände B1, B2 des Griffelements 6 überlagert dargestellt sind.

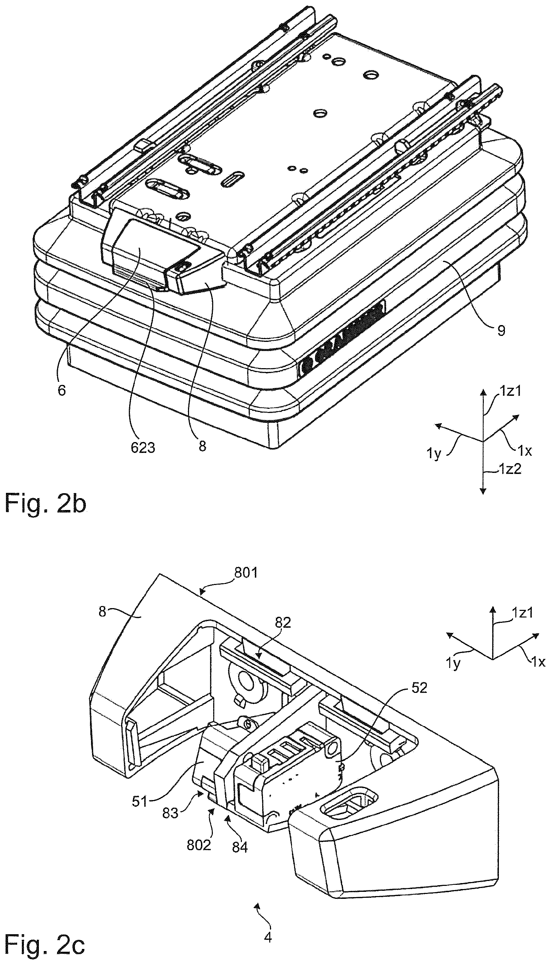

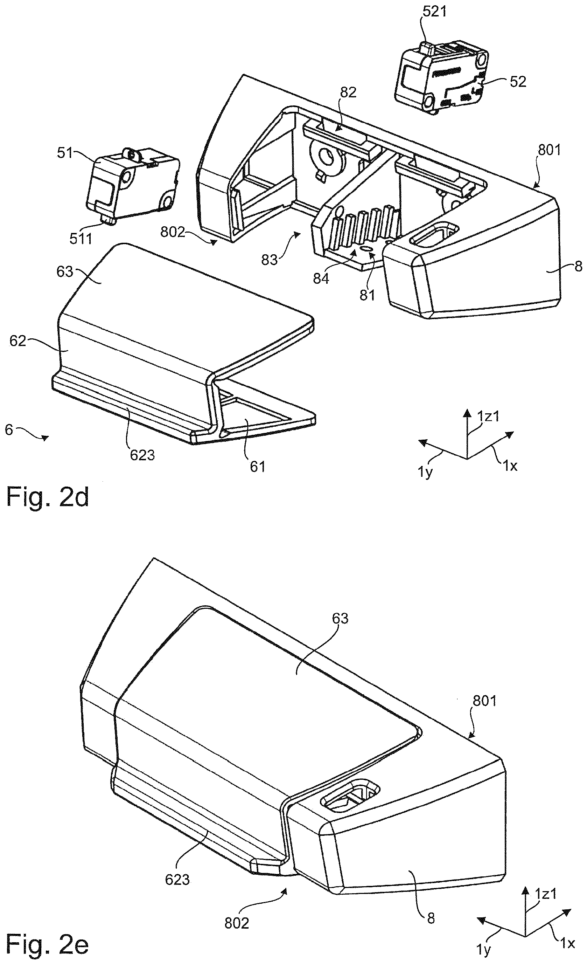

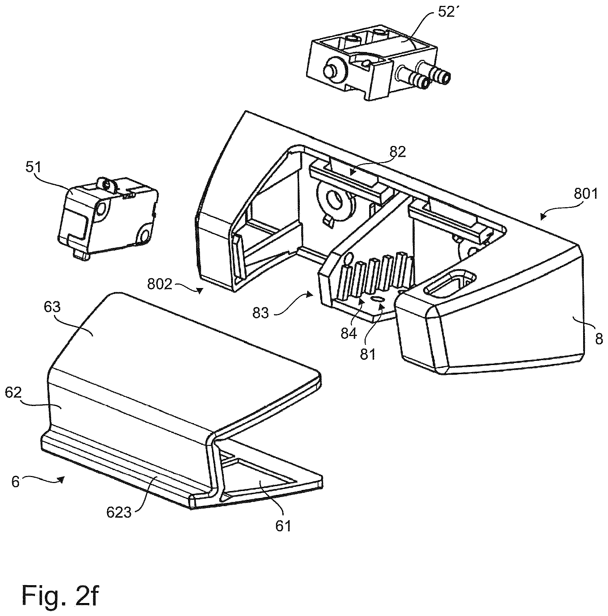

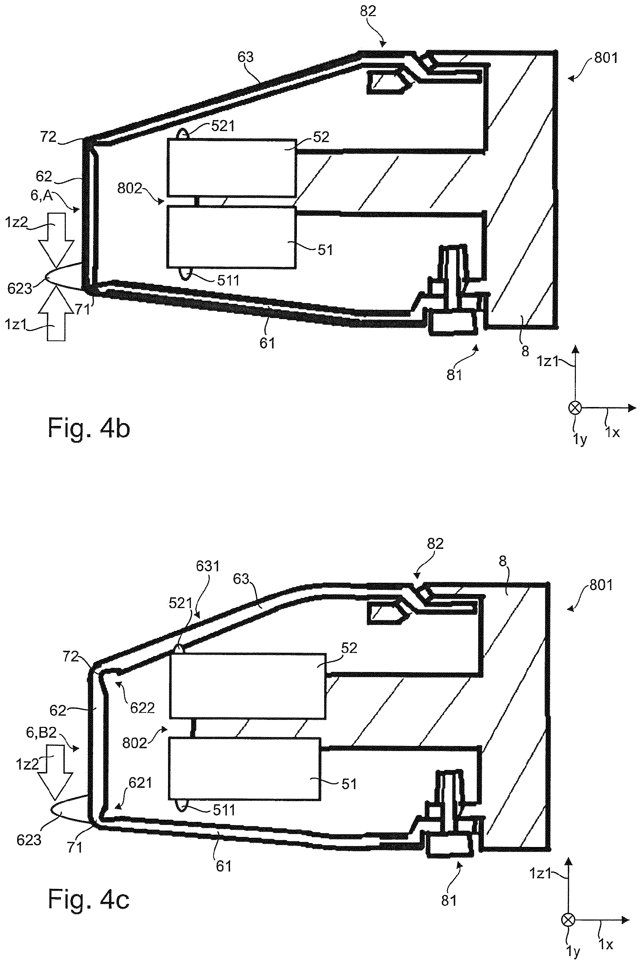

Die Figuren 4a, 4b und 4c zeigen darüber hinaus jeweils einen Querschnitt eines vereinfachten Modells des Griffelements 6, wobei die Schnittebene des Querschnitts jeweils parallel zur Längsrichtung 1x und zur Höhenrichtung 1z des Fahrersitzes angeordnet ist. Dabei ist die Position der Schalter 51, 52 gemäß den Figuren 4a, 4b und 4c lediglich beispielhaft dargestellt und weicht von der dargestellten realen Position der Schalter 51, 52 gemäß den Figuren 2c, 2d und 2f ab.

Um die Übersichtlichkeit zu verbessern, ist den Figuren ein kartesisches Koordinatensystem hinzugefügt, welches die Höhenrichtung 1z des Fahrzeugsitzes 1 (und hier noch genauer die Höhenrichtung 1z1 des Fahrzeugsitzes 1 nach oben sowie die Höhenrichtung 1z2 des Fahrzeugsitzes 1 nach unten), die Längsrichtung 1x des Fahrzeugsitzes 1 (entsprechend der Pfeilrichtung von vorne nach hinten) sowie die Breitenrichtung 1y des Fahrzeugsitzes 1 (entsprechend der Pfeilrichtung von links nach rechts) veranschaulicht.

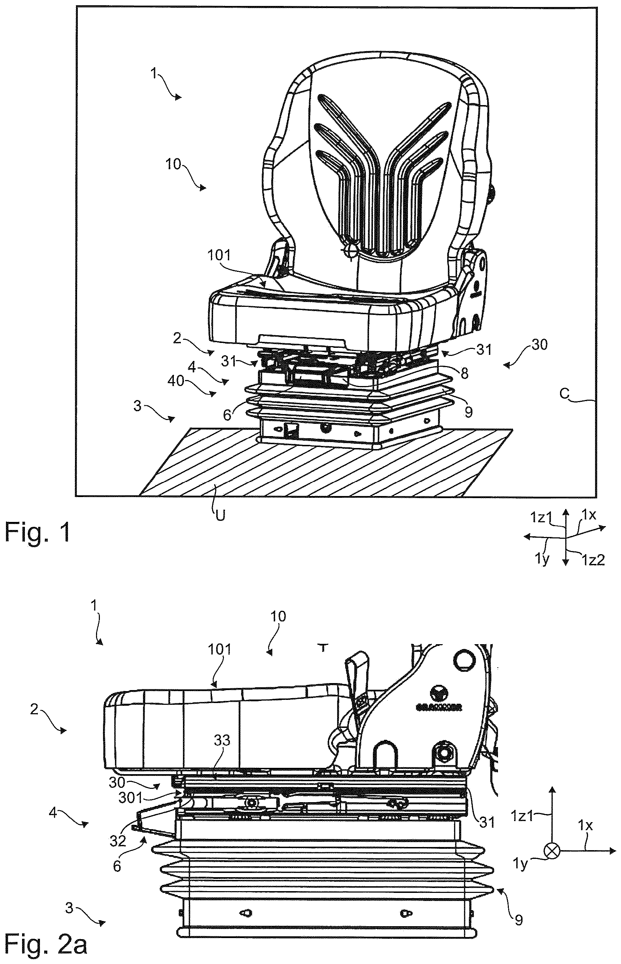

Die vorliegende Fig. 1 zeigt einen Fahrzeugsitz 1 mit einem Oberteil 2, welches gegenüber einem Unterteil 3 mittels einer Höhenverstelleinrichtung 4 in Höhenrichtung 1z des Fahrzeugsitzes 1 verstellbar gelagert ist. Die vorliegende Fig. 2a zeigt eine seitliche Darstellung von Teilen des Fahrzeugsitzes 1. Die vorliegende Fig. 2b zeigt eine perspektivische Darstellung von Teilen des Fahrzeugsitzes 1, gemäß welcher das Griffelement 6 gut zu erkennen ist. Die vorliegende Fig. 2e zeigt eine perspektivische Darstellung von Teilen der Höhenverstelleinrichtung 4, gemäß welcher das Griffelement 6 und das Trägerelement 8 gut zu erkennen sind.

Insbesondere gemäß den Figuren 2c und 2d ist zu sehen, dass die Höhenverstelleinrichtung 4 einen ersten Schalter 51, mittels dessen Betätigung das Oberteil 2 nach oben 1z1 verstellbar ist, und einen zweiten Schalter 52, mittels dessen Betätigung das Oberteil 2 nach unten 1z2 verstellbar ist, umfasst. Ebenfalls zeigt dies die Figur 2f, welche ähnlich zur Figur 2d ausgestaltet ist; lediglich der zweite Schalter 52' der Figur 2f weist eine zur Ausführungsform des zweiten Schalters 52 der Fig. 2d abweichende Ausführungsform auf.

Am Oberteil 2 des Fahrzeugsitzes 1 ist vorliegend das eigentliche Sitzteil 10 angeordnet. Das Unterteil 3 des Fahrzeugsitzes 1 ist vorliegend fest mit einem Untergrund U der schematisch angedeuteten Fahrzeugkabine C verbunden.

Die Höhenverstelleinrichtung 4 für den Fahrzeugsitz 1 umfasst vorliegend eine (hinter einem Faltenbalg 9 verborgene) Scherengestellmechanik, welche vorliegend mit einer Federungseinrichtung 40 und einer nicht gezeigten Dämpfungseinrichtung kombiniert ist. Die Federungseinrichtung 40 umfasst beispielsweise eine zwischen dem Oberteil und dem Unterteil angeordnete Luftfeder (nicht gezeigt). So kann der Luftfeder Luft zugeführt werden, um den Fahrzeugsitz 1 nach oben 1z1 zu verstellen, und der Luftfeder Luft entnommen werden, um den Fahrzeugsitz 1 nach unten 1z2 zu verstellen. Die Ansteuerung der Luftzufuhr oder der Luftentnahme erfolgt dabei vorliegend über den ersten 51 oder den zweiten Schalter 52.

Insbesondere die Fig. 2d zeigt dabei ein Griffelement (6) der Höhenverstelleinrichtung (4) mit mehreren miteinander verbundenen und zueinander beweglich gelagerten Abschnitten 61, 62, 63. Die Fig. 3 sowie ein Vergleich der Figuren 4a, 4b und 4c veranschaulichen dabei, dass ausgehend von einem Grundzustand A des Griffelements 6 mittels einer Verlagerung der Abschnitte 61, 62, 63 zueinander in eine erste Richtung 1z1 ein erster Verformungszustand B1 des Griffelements 6 und mittels einer Verlagerung der Abschnitte 61, 62, 63 zueinander in eine zur ersten Richtung 1z1 gegenläufige zweite Richtung 1z2 ein zweiter Verformungszustand B2 des Griffelements 6 erzielbar sind. Dabei ist im ersten Verformungszustand B1 mittels des Griffelements 6 der erste Schalter 51 und im zweiten Verformungszustand B2 mittels des Griffelements 6 der zweite Schalter 52 betätigbar.

Vorliegend ist das Griffelement 6 lediglich in die zwei Richtungen 1z1 und 1z2 verformbar. Durch die gegenläufige Anordnung der beiden Richtungen 1z1 und 1z2 kann eine Verformung in die erste Richtung 1z1 nur zeitlich unabhängig von einer Verformung in die zweite Richtung 1z2 stattfinden.

Vorliegend ist das Griffelement 6 elastisch ausgestaltet, so dass es, wenn die die Verformung auslösende Kraft nicht mehr anliegt, ausgehend vom ersten B1 oder zweiten Verformungszustand B2 wieder selbstständig in den Grundzustand A rückverformbar ist und dass der erste 51 und der zweite Schalter 52 nicht mehr in einem betätigten Zustand vorliegen.

Das Griffelement 6 ist dabei vorliegend unterhalb einer Sitzfläche 101 des Sitzteils 10 des Fahrzeugsitzes 1 und gleichzeitig am Oberteil 2 angeordnet, so dass dafür gesorgt ist, dass der Abstand zwischen dem Griffelement 6 und der Hand des Fahrers, die das Griffelement 6 betätigt, unabhängig von der eingestellten Höhe des Oberteils 2 in Relation zum Unterteil 3 stets gleich ist.

Vorliegend weist der Fahrzeugsitz 1 eine Längsverstelleinrichtung 30 mit zwei Schienenpaaren 31 auf, wobei jedes Schienenpaar 31 eine untere Führungsschiene 32 und eine obere Gleitschiene 33 aufweist. Vorliegend ist das Griffelement 6 in Breitenrichtung 1y des Fahrzeugsitzes 1 zwischen den beiden Schienenpaaren 31, in Höhenrichtung 1z des Fahrzeugsitzes 1 zumindest teilweise auf gleicher Höhe zu diesen Schienenpaaren 31 und in Längsrichtung 1x des Fahrzeugsitzes 1 unmittelbar vor einem vorderen Ende 301 der beiden Gleitschienen 32 angeordnet.

Vorliegend entspricht die erste Richtung, in welche das Griffelement 6 verformbar ist, der Höhenrichtung nach oben 1z1. Vorliegend entspricht die zweite Richtung, in welche das Griffelement 6 verformbar ist, der Höhenrichtung nach unten 1z2. Zum Verstellen des Fahrzeugsitzes 1 nach oben 1z1 muss der Fahrer also auch das Griffelement 6 nach oben 1z1 verformen; analog muss der Fahrer zum Verstellen des Fahrzeugsitzes 1 nach unten 1z2 das Griffelement 6 nach unten 1z2 verformen.

Das Griffelement 6 ist also in sich verformbar ausgestaltet. Vorliegend bleiben zumindest einige Teile des Griffelements 6 bei beiden Verformungen stationär, verformen sich also nicht mit.

Insbesondere die Figuren 2d, 4a, 4b und 4c zeigen, dass vorliegend ein erster 61, ein zweiter 62 und ein dritter 63 der miteinander verbundenen und zueinander beweglich gelagerten Abschnitte 61, 62, 63 vorgesehen sind, wobei der zweite beweglich gelagerte Abschnitt 62 an einem ersten Ende 621 mittels eines ersten Filmscharniers 71 mit dem ersten beweglich gelagerten Abschnitt 61 und an einem zweiten Ende 622 mittels eines zweiten Filmscharniers 72 mit dem dritten beweglich gelagerten Abschnitt 63 verbunden ist. Die Figuren 4a und 4c zeigen, dass im ersten Verformungszustand B1 und im zweiten Verformungszustand B2 die beiden Abschnitte 61 und 63 jeweils elastisch verformt sind.

Der erste 61, zweite 62 und dritte Abschnitt 63 und die beiden Filmscharniere 71, 72 bilden also miteinander vorliegend ein einstückiges Teil, welches in einem einzigen Spritzgussprozess gefertigt werden kann.

Vorliegend ist das Griffelement aus Polypropylen (PP) gefertigt.

Der erste 61 und der dritte Abschnitt 63 weisen dabei vorliegend im Wesentlichen die Form eines Trapezes auf. Der erste Abschnitt 61 ist vorliegend kontaktlos zum dritten Abschnitt 63 angeordnet.

Der zweite Abschnitt 62 weist vorliegend im Wesentlichen die Form eines Rechtecks auf. Ferner ist gezeigt, dass der zweite Abschnitt 62 vorliegend einen Verstärkungsabschnitt 623 aufweist, welcher in Form einer Materialverdickung ausgestaltet ist. Vorliegend ist die Materialverdickung in Form einer länglichen Lasche ausgestaltet, welche senkrecht zur ersten 1z1 und zur zweiten Richtung 1z2 und parallel zur Breitenrichtung 1y des Fahrzeugsitzes 1 angeordnet ist.

Vorliegend ist im ersten Verformungszustand B1 des Griffelements 6 (siehe Fig. 4a) ein unmittelbarer Kontakt zwischen einem Auslöseelement 511 des ersten Schalters 51 und einem Anteil des ersten beweglich gelagerten Abschnitts 61 und im zweiten Verformungszustand B2 des Griffelements 6 (siehe Fig. 4c) ein unmittelbarer Kontakt zwischen einem Auslöseelement 521 des zweiten Schalters 52 und einem Anteil des dritten beweglich gelagerten Abschnitts 63 ausgebildet. Die Anteile des ersten 61 und des dritten Abschnitts 63 werden daher im Folgenden als Schaltfahne 611 und Schaltfahne 613 bezeichnet.

Analog dazu sind im Grundzustand A des Griffelements 6 (siehe Fig. 4b) vorliegend beide Schalter 51, 52 kontaktfrei zum ersten 61 und zum dritten Abschnitt 63 sowie kontaktfrei zu jeglichem anderen Element angeordnet. Das gleiche gilt vorliegend auch für beide Auslöseelemente 511, 521 der Schalter 51, 52.

Ebenfalls ist gezeigt, dass der zweite beweglich gelagerte Abschnitt 62 im Grundzustand A des Griffelements 6 (siehe Fig. 4b), im ersten Verformungszustand B1 des Griffelements 6 (siehe Fig. 4a) und im zweiten Verformungszustand B2 des Griffelements 6 (siehe Fig. 4c) kontaktlos zum ersten Schalter 51 und zum zweiten Schalter 52 angeordnet ist.

Der erste 61 und der dritte Abschnitt 63 sind vorliegend in sich elastisch verformbar ausgestaltet. Somit können die markierten Stellen als Schaltfahnen 611, 631 dienen.

Vorliegend umfasst die Höhenverstelleinrichtung 4 ein mit dem Oberteil 2 verbundenes und als einstückiges Spritzgussteil ausgestaltetes Trägerelement 8, welches an einem ersten Ende 801 einen ersten Lagersitz 81 für den ersten beweglich gelagerten Abschnitt 61 und einen zweiten Lagersitz 82 für den dritten beweglich gelagerten Abschnitt 63 ausbildet. Vorliegend ist das erste Ende 801 des Trägerelements 8 in Sitzlängsrichtung 1x hinten angeordnet.

Dabei ist vorliegend der erste beweglich gelagerte Abschnitt 61 mittels einer festen Einspannung in Form einer Schraubverbindung mit dem ersten Lagersitz 81 verbunden. Zudem ist vorliegend der dritte beweglich gelagerte Abschnitt 63 mittels einer formschlüssigen Verbindung in Form einer Schnappverbindung mit dem zweiten Lagersitz 82 verbunden.

Ferner ist gezeigt, dass das Trägerelement 8 an einem zweiten Ende 802 einen dritten Lagersitz 83 für den ersten Schalter 51 und einen vierten Lagersitz 84 für den zweiten Schalter 52 ausbildet. Vorliegend ist das zweite Ende 802 des Trägerelements 8 in Sitzlängsrichtung 1x vorne angeordnet.

Es versteht sich, dass es sich bei den vorstehend erläuterten Ausführungsbeispielen lediglich um eine erste Ausgestaltung des erfindungsgemäßen Fahrzeugsitzes handelt. Insofern beschränkt sich die Ausgestaltung der Erfindung nicht auf diese Ausführungsbeispiele.

### Bezugszeichenliste

- 1: Fahrzeugsitz
- 1x: Längsrichtung
- 1y: Breitenrichtung
- 1z: Höhenrichtung
- 1z1: Höhenrichtung nach oben
- 1z2: Höhenrichtung nach unten
- 2: Oberteil
- 3: Unterteil
- 4: Höhenverstelleinrichtung
- 6: Griffelement
- 8: Trägerelement
- 9: Faltenbalg
- 10: Sitzteil
- 30: Längsverstelleinrichtung
- 31: Schienenpaar
- 32: Führungsschiene
- 33: Gleitschiene
- 40: Federungseinrichtung
- 51, 52, 52': Schalter
- 61,62,63: Abschnitt
- 71, 72: Filmscharnier
- 81, 82, 83, 84: Lagersitz
- 101: Sitzfläche
- 301,621,622,801,802: Ende
- 511, 521: Auslöseelement
- 611, 631: Schaltfahne
- 623: Verstärkungsabschnitt
- A: Grundzustand
- B1, B2: Verformungszustand
- C: Fahrzeugkabine

## Patentansprüche

1. Fahrzeugsitz (1) mit einem Oberteil (2), welches gegenüber einem Unterteil (3) mittels einer Höhenverstelleinrichtung (4) in Höhenrichtung (1z) des Fahrzeugsitzes (1) verstellbar gelagert ist, wobei die Höhenverstelleinrichtung (4) einen ersten Schalter (51), mittels dessen Betätigung das Oberteil (2) nach oben (1z1) verstellbar ist, und einen zweiten Schalter (52), mittels dessen Betätigung das Oberteil (2) nach unten (1z2) verstellbar ist, umfasst,
**dadurch gekennzeichnet, dass**
ein Griffelement (6) der Höhenverstelleinrichtung (4) mit einem ersten (61), einem zweiten (62) und einem dritten (63) Abschnitt vorgesehen ist, wobei die Abschnitte (61, 62, 63) miteinander verbunden und zueinander beweglich gelagert sind, wobei ausgehend von einem Grundzustand (A) des Griffelements (6) mittels einer Verlagerung der Abschnitte (61, 62, 63) zueinander in eine erste Richtung (1z1) ein erster Verformungszustand (B1) des Griffelements (6) und mittels einer Verlagerung der Abschnitte (61, 62, 63) zueinander in eine zur ersten Richtung (1z1) gegenläufige zweite Richtung (1z2) ein zweiter Verformungszustand (B2) des Griffelements (6) erzielbar ist, wobei im ersten Verformungszustand (B1) mittels des Griffelements (6) der erste Schalter (51) und im zweiten Verformungszustand (B2) mittels des Griffelements (6) der zweite Schalter (52) betätigbar sind, wobei die Höhenverstelleinrichtung (4) ein mit dem Oberteil (2) oder dem Unterteil (3) verbundenes Trägerelement (8) umfasst, welches an einem ersten Ende (801) einen ersten Lagersitz (81) für den ersten beweglich gelagerten Abschnitt (61) und einen zweiten Lagersitz (82) für den dritten beweglich gelagerten Abschnitt (63) ausbildet.

2. Fahrzeugsitz (1) nach Anspruch 1,
**dadurch gekennzeichnet, dass**
der zweite beweglich gelagerte Abschnitt (62) an einem ersten Ende (621) mittels eines ersten Filmscharniers (71) mit dem ersten beweglich gelagerten Abschnitt (61) und an einem zweiten Ende (622) mittels eines zweiten Filmscharniers (72) mit dem dritten beweglich gelagerten Abschnitt (63) verbunden ist.

3. Fahrzeugsitz (1) nach Anspruch 1 oder 2,
**dadurch gekennzeichnet, dass**
im ersten Verformungszustand (B1) ein unmittelbarer Kontakt zwischen dem ersten Schalter (51) und dem ersten beweglich gelagerten Abschnitt (61) und im zweiten Verformungszustand (B2) ein unmittelbarer Kontakt zwischen dem zweiten Schalter (52) und dem dritten beweglich gelagerten Abschnitt (63) ausbildbar sind.

4. Fahrzeugsitz (1) nach einem der vorhergehenden Ansprüche,
**dadurch gekennzeichnet, dass**
der zweite beweglich gelagerte Abschnitt (62) im Grundzustand (A), im ersten Verformungszustand (B1) und im zweiten Verformungszustand (B2) des Griffelements (6) kontaktlos zum ersten Schalter (51) und zum zweiten Schalter (52) angeordnet ist.

5. Fahrzeugsitz (1) nach einem der vorhergehenden Ansprüche,
**dadurch gekennzeichnet, dass**
der erste beweglich gelagerte Abschnitt (61) mittels einer festen Einspannung mit dem ersten Lagersitz (81) verbunden ist.

6. Fahrzeugsitz (1) nach einem der vorhergehenden Ansprüche,
**dadurch gekennzeichnet, dass**
der dritte beweglich gelagerte Abschnitt (63) mittels einer formschlüssigen Verbindung mit dem zweiten Lagersitz (82) verbunden ist.

7. Fahrzeugsitz (1) nach einem der vorhergehenden Ansprüche,
**dadurch gekennzeichnet, dass**
das Trägerelement (8) an einem zweiten Ende (802) einen dritten Lagersitz (83) für den ersten Schalter (51) und einen vierten Lagersitz (84) für den zweiten Schalter (52) ausbildet.

## Claims

1. Vehicle seat (1) having an upper part (2) which is mounted such that it can be adjusted in the height direction (1z) of the vehicle seat (1) with respect to a lower part (3) by means of a height adjustment device (4), the height adjustment device (4) comprising a first switch (51), by means of whose actuation the upper part (2) can be adjusted upwards (1z1), and a second switch (52), by means of whose actuation the upper part (2) can be adjusted downwards (1z2),
**characterized in that**
a handle element (6) of the height adjustment device (4) is provided with a first (61), a second (62) and a third (63) section, the sections (61, 62, 63) being connected to one another and mounted so as to be movable relative to one another, wherein, starting from a basic state (A) of the handle element (6), a first deformation state (B1) of the handle element (6) can be achieved by means of a displacement of the sections (61, 62, 63) relative to one another in a first direction (1z1) and a second deformation state (B2) of the handle element (6) can be achieved by means of a displacement of the sections (61, 62, 63) relative to one another in a second direction (1z2) opposite to the first direction (1z1), wherein in the first deformation state (B1) the first switch (51) can be actuated by means of the handle element (6) and in the second deformation state (B2) the second switch (52) can be actuated by means of the handle element (6), wherein the height adjustment device (4) comprises a carrier element (8) which is connected to the upper part (2) or the lower part (3), which at a first end (801) forms a first bearing seat (81) for the first movably mounted section (61) and a second bearing seat (82) for the third movably mounted section (63).

2. Vehicle seat (1) according to claim 1,
**characterized in that**
the second movably mounted section (62) is connected at a first end (621) by means of a first film hinge (71) to the first movably mounted section (61) and at a second end (622) by means of a second film hinge (72) to the third movably mounted section (63).

3. Vehicle seat (1) according to claim 1 or 2,
**characterized in that**
in the first deformation state (B1), direct contact can be formed between the first switch (51) and the first movably mounted section (61), and in the second deformation state (B2), direct contact can be formed between the second switch (52) and the third movably mounted section (63).

4. Vehicle seat (1) according to any of the preceding claims,
**characterized in that**
the second movably mounted section (62) is arranged without contact with the first switch (51) and the second switch (52) in the basic state (A), in the first deformation state (B1) and in the second deformation state (B2) of the handle element (6).

5. Vehicle seat (1) according to any of the preceding claims,
**characterized in that**
the first movably mounted section (61) is connected to the first bearing seat (81) by means of a fixed clamping.

6. Vehicle seat (1) according to any of the preceding claims,
**characterized in that**
the third movably mounted section (63) is connected to the second bearing seat (82) by means of a positive connection.

7. Vehicle seat (1) according to any of the preceding claims,
**characterized in that**
the carrier element (8) forms at a second end (802) a third bearing seat (83) for the first switch (51) and a fourth bearing seat (84) for the second switch (52).

## Revendications

1. Siège de véhicule (1) ayant une partie supérieure (2), laquelle est montée de manière réglable par rapport à une partie inférieure (3) au moyen d'un dispositif de réglage en hauteur (4) dans la direction de la hauteur (1z) du siège de véhicule (1), le dispositif de réglage en hauteur (4) comportant un premier commutateur (51), par l'actionnement duquel la partie supérieure (2) est réglable vers le haut (1z1), et un second commutateur (52), par l'actionnement duquel la partie supérieure (2) est réglable vers le bas (1z2),
**caractérisé par le fait qu'**
un élément formant poignée (6) du dispositif de réglage en hauteur (4) comporte une première (61), une deuxième (62) et une troisième section (63), les sections (61, 62, 63) étant reliées entre elles et montées de manière déplaçable l'une par rapport à l'autre, où, en partant d'un état de base (A) de l'élément formant poignée (6), un premier état de déformation (B1) de l'élément formant poignée (6) est apte à être obtenu au moyen d'un déplacement des sections (61, 62, 63) l'une par rapport à l'autre dans une première direction (1z1), et un second état de déformation (B2) de l'élément formant poignée est apte à être obtenu au moyen d'un déplacement des sections (61, 62, 63) l'une par rapport à l'autre dans une seconde direction (1z2) opposée à la première direction (1z1), où, dans le premier état de déformation (B1), le premier commutateur (51) est actionnable au moyen de l'élément formant poignée (6) et, dans le second état de déformation (B2), le second commutateur (52) est actionnable au moyen de l'élément formant poignée (6), le dispositif de réglage en hauteur (4) comportant un élément de support (8) relié à la partie supérieure (2) ou à la partie inférieure (3), lequel forme à une première extrémité (801) un premier siège de palier (81) pour la première section (61) montée de manière déplaçable et un deuxième siège de palier (82) pour la troisième section (63) montée de manière déplaçable.

2. Siège de véhicule (1) selon la revendication 1,
**caractérisé par le fait que**
la deuxième section (62) montée de manière déplaçable est reliée, à une première extrémité (621), au moyen d'une première charnière - film (71), à la première section (61) montée de manière déplaçable, et, à une seconde extrémité (622), au moyen d'une seconde charnière - film (72), à la troisième section (63) montée de manière déplaçable.

3. Siège de véhicule (1) selon l'une des revendications 1 ou 2,
**caractérisé par le fait que**
dans le premier état de déformation (B1), un contact direct est apte à être formé entre le premier commutateur (51) et la première section (61) montée de manière déplaçable et, dans le second état de déformation (B2), un contact direct est apte à être formé entre le second commutateur (52) et la troisième section (63) montée de manière déplaçable.

4. Siège de véhicule (1) selon l'une des revendications précédentes,
**caractérisé par le fait que**
la deuxième section (62) montée de manière déplaçable est disposée sans contact par rapport au premier commutateur (51) et au second commutateur (52) dans l'état de base (A), dans le premier état de déformation (B1) et dans le second état de déformation (B2) de l'élément formant poignée (6).

5. Siège de véhicule (1) selon l'une des revendications précédentes,
**caractérisé par le fait que**
la première section (61) montée de manière déplaçable est reliée au premier siège de palier (81) au moyen d'un serrage fixe.

6. Siège de véhicule (1) selon l'une des revendications précédentes,
**caractérisé par le fait que**
la troisième section (63) montée de manière déplaçable est reliée au deuxième siège de palier (82) au moyen d'une liaison par coopération de formes.

7. Siège de véhicule (1) selon l'une des revendications précédentes,
**caractérisé par le fait que**
l'élément de support (8) forme, à une seconde extrémité (802), un troisième siège de palier (83) pour le premier commutateur (51) et un quatrième siège de palier (84) pour le second commutateur (52).
